# EUROPÄISCHE PATENTANMELDUNG

(11) **EP 0 789 173 A1**
(43) Veröffentlichungstag der Anmeldung: **13.08.1997**
(21) Anmeldenummer: 96116739.2
(22) Anmeldetag: 18.10.1996
(51) Int. Cl.: F16J 15/12

(54) **Metallische Flachdichtung**

(30) Priorität: 09.02.1996 DE 19640694
(71) Anmelder: GOETZE Payen GmbH, D-57562 Herdorf (DE)
(72) Erfinder: Majewski, Klaus-Peter, Dipl.-Ing., 51399 Burscheid (DE); Lönne, Klaus, Dipl.-Ing., 51399 Burscheid (DE)

(57) **Zusammenfassung**

Die Erfindung betrifft eine metallische Flachdichtung (1) mit einem elastischen Überzug (5). Der Überzug (5) ist durch ionisierende Strahlung endvernetzt. Im Bereich der Sicken (4) ist ein anderer Vernetzungsgrad als im übrigen Bereich erstellbar.

## Beschreibung

Die Erfindung betrifft eine metallische Flachdichtung, insbesondere Zylinderkopfdichtung für Brennkraftmaschinen mit Öffnungen umgebenden Sicken und einem thermisch vorvernetzten elastischen Überzug auf der Dichtfläche.

Im Betrieb einer Brennkraftmaschine führen thermische und dynamische Belastungen zu ungleichmäßigen Verformungen von Zylinderkopf und Zylinderblock. Es kann dazu führen, daß die Dichtpressung in einigen Bereichen unter den zulässigen Wert abfällt. Um auch an diesen Stellen eine ausreichende Abdichtung zu gewährleisten, werden auf der Dichtfläche Überzüge mit verschiedenen Eigenschaften aufgebracht. Die Wirkung der Überzüge beruht einerseits auf der Sicke, andererseits auf der spezifischen Eigenschaft. Flüssig aufgetragene Gummimischungen können die Abdichtgüte von Öl- und Wasserdurchgängen verbessern. Wärmebeständige Elastomere gewährleisten eine Gasabdichtung am Brennraumdurchgang.

Die EP 0 468 526 B1 offenbart eine gattungsgemäße Flachdichtung. Die Dichtung weist über der gesamten Oberfläche einen Überzug auf, der sowohl in der Dicke, in der Breite und in der Härte variiert, je nachdem an welchem Abschnitt der Dichtung abgedichtet werden muß.

Um eine Anpassung an die jeweilige Oberfläche des Motorblocks oder Zylinderkopfes zu gewährleisten, ist der Überzug teilweise nur zu einer noch plastischen oder formstabilen Konsistenz vorvernetzt, so daß die Endvernetzung nach dem Einbau in der Betriebshitze des Motors erfolgt. Derartige Maßnahmen erweisen sich in der Herstellung als sehr kostenintensiv. Nur teilvernetzte Überzüge können nach längerer Lagerung nachvernetzen, so daß die Dichtungen für den Einbau nur noch begrenzt geeignet sind. Der Erfindung liegt die Aufgabe zugrunde, eine gattungsgemäße Flachdichtung mit einem verbesserten Überzug zu schaffen. Die Flachdichtung soll einfach herstellbar sein und gleichzeitig sollen alle Öffnungen mit ihren verschiedenen Anforderungen gut abgedichtet werden können.

Diese Aufgabe wird erfindungsgemäß durch die kennzeichenden Merkmale des Patentanspruches 1 gelöst. Vorteilhafte Ausgestaltungen der Erfindung sind in den Unteransprüchen beschrieben.

Die Endvernetzung des Überzugs durch ionisierende Strahlung ermöglichst einen besseren Polymerisierungsgrad des Überzuges, wodurch die chemischen und physikalischen Eigenschaften verbessert werden. Zwischen Flachdichtung und Zylinderkopf oder Zylinderblock entstehen aus thermischen und dynamischen Belastungen Relativbewegungen.Im Bereich der Sicken, das heißt, im Bereich hoher Flächenpressung kann die Bewegung bei üblichen Flachdichtungen zur Zerstörung des Überzuges führen. Die Endvernetzung durch ionisierende Strahlen erlaubt eine gezielte Einflußnahme auf genau diesen Bereich. Die Härte, das heißt, der Vernetzungsgrad kann individuell auf die Gegebenheiten des Anwendungsfalles abgestimmt werden. Je nach Motor können so gezielt angepaßte Flachdichtungen ohne Mehrkosten hergestellt werden.

Die Erfindung ist in der Zeichnung dargestellt und wird im folgenden näher erläutert. Es zeigen:
- Figur 1: Ausschnitt einer Flachdichtung in der Draufsicht
- Figur 2: Schnitt gemäß Linie II - II

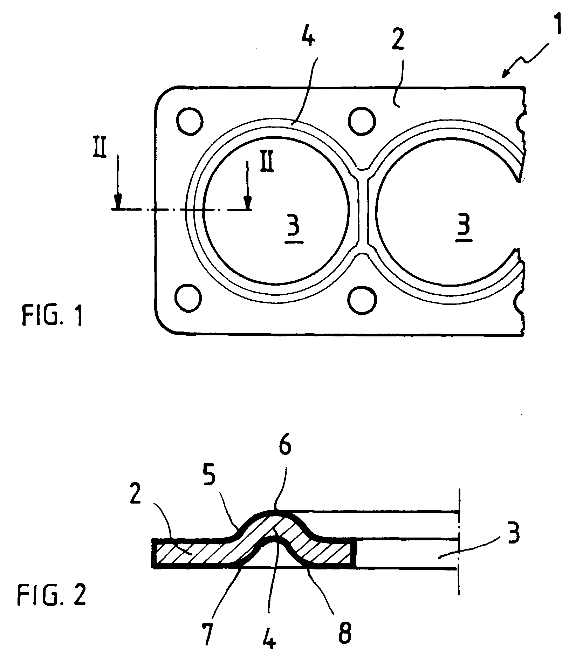

Die in der Figur 1 dargestellte Flachdichtung (1) besteht aus einer Metallage (2) mit um den Brennraum (3) verlaufenden Sicken (4). Auf der Dichtfläche weist die Flachdichtung (1) einen Überzug (5) (Figur 2) auf Der Überzug (5) besteht aus einem elastischen Material und ist durch ionisierende Strahlen endvernetzt. Durch unterschiedliche Bestrahlung der Dichtfläche kann der Vernetzungsgrad im Bereich, beispielsweise der Sickenspitze (6) oder der Sickenfüße (7, 8), anders eingestellt werden als im übrigen Bereich der Flachdichtung (1).

## Patentansprüche

1. Metallische Flachdichtung, insbesondere Zylinderkopfdichtung für Brennkraftmaschinen mit Öffnungen umgebenden Sicken und einem thermisch vorvernetzten elastischen Überzug auf der Dichtfläche, dadurch gekennzeichnet, daß der Überzug (5) durch ionisierende Strahlung endvernetzt ist.

2. Metallische Flachdichtung nach Anspruch 1, dadurch gekennzeichnet, daß die Strahlen Elektronenstrahlen sind.

3. Metalliche Flachdichtung nach Anspruch 1, daruch gekennzeichent, daß der Überzug (5) durch Lagerung der Flachdichtung (1) in radioaktiver Atmosphäre endvernetzt ist.

4. Metallische Flachdichtung nach mindestens einem der Ansprüche 1 bis 3, dadurch gekennzeichnet, daß der Überzug (5) der Dichtfläche nur partiell endvernetzt ist.

5. Metallische Flachdichtung nach mindestens einem der Ansprüche 1 bis 4, dadurch gekennzeichnet, daß der Überzug (5) nur im Bereich hoher Flächenpressung, insbesondere im Bereich der Sicken (4) endvernetzt ist.
